# EUROPÄISCHE PATENTSCHRIFT

(11) **EP 2 060 459 B1**
(45) Veröffentlichungstag und Bekanntmachung des Hinweises auf die Patenterteilung: **20.03.2013**
(21) Anmeldenummer: 08167681.9
(22) Anmeldetag: 28.10.2008
(51) Int. Cl.: B60T 13/66

(54) **Bremsanlage für ein Schienenfahrzeug und Verfahren zum Abbremsen des Schienenfahrzeugs und Bremssteuerung für eine derartige Bremsanlage**
Braking system for a railway vehicle and method of braking the railway vehicle and brake control for such a braking system
Agencement de freinage pour un véhicule sur rail et procédé destiné au freinage du véhicule sur rail et commande de frein pour un tel agencement de freinage

(30) Priorität: 16.11.2007 DE 102007056146
(43) Veröffentlichungstag der Anmeldung: 20.05.2009
(73) Patentinhaber: Siemens Aktiengesellschaft, 80333 München (DE)
(72) Erfinder: Wiesand, Manfred, 90559 Burgthann (DE)

(56) Entgegenhaltungen:
- EP-A- 0 958 980
- EP-A- 1 266 814
- DE-A1- 19 848 990
- US-A1- 2004 046 442

## Beschreibung

Die Erfindung bezieht sich auf eine Bremsanlage für ein in Wagen unterteiltes Schienenfahrzeug mit Drehgestellen, welche das Schienenfahrzeug tragen, so dass die Drehgestelle durch eine auf ihnen lastende Gewichtskraft belastet sind und anhand dieser Gewichtskraft eine Unterteilung in schwere und leichte Drehgestelle festgelegt ist, wobei die Bremsanlage mindestens eine betätigbare Auslöseeinheit zur Erzeugung eines Bremssignals, Bremssteuerungen, welche das Bremssignal empfangen und in Abhängigkeit des Bremssignals Steuersignale erzeugen, und Bremsaktuatoren aufweist, die mit wenigstens einer Bremssteuerung mittels einer Wirkverbindung verbunden sind und in Abhängigkeit der Steuersignale eine Bremskraft erzeugen.

Die Erfindung bezieht sich auch auf ein Verfahren zum Abbremsen eines in Wagen unterteilten Schienenfahrzeugs mit Drehgestellen, welche das Schienenfahrzeug tragen, so dass die Drehgestelle durch eine auf ihnen lastende Gewichtskraft des Schienenfahrzeugs belastet sind, und anhand dieser Gewichtskraft eine Unterteilung in schwere und leichte Drehgestelle festgelegt ist, wobei das Schienenfahrzeug eine Bremsanlage mit mindestens einer betätigbaren Auslöseeinheit, Bremsaktuatoren, welche jeweils in Wirkverbindung zu einem abzubremsenden Bauteil stehen, und Bremssteuerungen, welche in Wirkverbindung mit Bremsaktuatoren stehen aufweist, bei dem ein Abbremsvorgang durch Betätigen der Auslöseeinheit unter Gewinnung eines Bremssignals gestartet wird, welches von den Bremssteuerungen empfangen wird und jede der Bremssteuerungen daraufhin Steuersignale erzeugt, wobei Bremsaktuatoren mittels dieser Steuersignale angesprochen werden, so dass die Bremsaktuatoren in Abhängigkeit der Steuersignale eine Kraft in abzubremsende Bauteile der Drehgestelle einleiten, und bei Ausfall einer Bremssteuerung die Anzahl der Bremsaktuatoren, die jeweils mit einer anderen Bremssteuerung verbunden sind, noch eine Bremskraft erzeugen, die größer als eine Mindestbremskraft ist.

Die EP 1 266 814 A2 betrifft ein Bremssystem für Schienenfahrzeuge, wobei das Bremssystem eine redundante zentrale Bremssteuerung aufweist, die über einen sich durch den gesamten Fahrzeugverband des Schienenfahrzeugs erstreckenden Datenbus mit Bremssteuerungen einer mittleren Steuerungsebene verbunden ist. Die Bremssteuergeräte der mittleren Steuerungsebene sind mit lokalen Bremssteuergeräten über einen anderen schnelleren Datenbus verbunden. Aufgrund dieser Verbindung der lokalen Bremssteuerungen mit der zentralen Steuereinheit über zwei unterschiedlich schnell getaktete serielle Datenbusse ist eine Echtzeitregelung der Bremsen erleichtert.

Weitere Bremssysteme sind in der US 2004/046442 A1, der EP 0 958 980 und der DE 198 48 990 A1 beschrieben.

Die Erfindung bezieht sich auch auf eine Bremssteuerung für eine derartige Bremsanlage, mit Bauteilen, welche zum Empfang von eine Notbremsung auslösenden Bremssignalen eingerichtet sind und in Abhängigkeit der Bremssignale Steuersignale für einen Bremsaktuator erzeugen.

Schienenfahrzeuge sind aus sicherheitstechnischen Gründen im Allgemeinen mit mehreren Bremssystemen ausgerüstet. Es wird zwischen elektrizitätsunabhängigen und elektrizitätsabhängigen Bremssystemen unterschieden. Elektrizitätsabhängige Bremssysteme weisen im Allgemeinen Bremssteuerungen auf, die mittels elektrischer Signale ein Ansprechen von Bremseinheiten des Schienenfahrzeugs ermöglichen. Ein Beispiel hierfür ist eine direkte elektropneumatische Bremse. Bei dieser Bremse wird mittels eines elektrischen Signals ein Bremsdruck gesteuert, welcher Bremseinheiten des Schienenfahrzeugs aktiviert. Die Steuerung des Bremsdrucks erfolgt über elektrische Be- und Entlüftungsventile, welche die Bremszylinder direkt be- und entlüften, wobei die Druckluft Vorratsdruckbehältern entnommen wird. Jedes dieser Bremssysteme muss zusätzlich ausfallsicher konstruiert sein. Aus diesem Grund ist im Fall einer elektropneumatischen Bremse üblicherweise in jedem Wagen eine separate Bremssteuerung vorgesehen, so dass bei Ausfall einer Bremssteuerung höchstens die Bremskraft dieses Wagens ausfällt. Zur Erhöhung der Sicherheit kann auch eine Bremssteuerung je Drehgestell vorgesehen sein.

Eine Bremsvorrichtung für ein Fahrzeug der eingangs genannten Art ist aus der DE 103 20 608 A1 bekannt. Die Bremsvorrichtung weist Bremsaktuatoren auf, welche durch einen Bremsdruck aktiviert ein Rad des Fahrzeuges abbremsen und zwei Bremssteuerungen, welche in elektrischer Verbindung zu mehreren Bremsdruckmodulen stehen, so dass die Bremsdruckmodule durch ein Steuersignal der Bremssteuerungen Bremsdruck aus einer Versorgungseinheit an die Bremsaktuatoren freigeben.

Die Bremsvorrichtung weist zur Erhöhung der Ausfallsicherheit zwei unabhängige Bremssteuerungen auf. Nachteilig bei dieser Bremsvorrichtung ist, dass eine Erhöhung der Sicherheit durch eine Verdoppelung der Bauteile bewirkt wird.

Der Erfindung liegt die Aufgabe zugrunde, eine Bremsanlage für ein Schienenfahrzeug zu schaffen, welche eine hohe Ausfallsicherheit und eine besonders geringe Anzahl von Bauteilen aufweist.

Die Aufgabe wird erfindungsgemäß bei einer Bremsanlage der eingangs genannten Art dadurch gelöst, dass die Anzahl der Bremssteuerungen geringer als die Anzahl der Wagen aber mindestens gleich zwei ist, und die Wirkverbindungen und deren Anzahl derart gewählt ist, dass jede Wirkverbindung von einer Bremssteuerung ausgeht und sich bis zu einem Bremsaktuator erstreckt und für jede Bremssteuerung so viele Fremd-Wirkverbindungen vorgesehen sind, welche jeweils von einer anderen Bremssteuerung ausgehen, dass die Summe der Bremskräfte der Bremsaktuatoren, die mit den Fremd-Wirkverbindungen verknüpft sind, größer oder gleich einer Mindestbremskraft ist.

Der Erfindung liegt der Gedanke zugrunde, dass zur Aufrechterhaltung der Mindestbremskraft in einem Störfall bei minimaler Anzahl der Bremssteuerungen für jede Bremssteuerung eine ausreichende Anzahl an Fremd-Wirkverbindungen vorgesehen ist. Eine Fremd-Wirkverbindung geht jeweils von einer anderen Bremssteuerung aus. Fällt die besagte Bremssteuerung aus, erzeugt die Anzahl der über die Fremd-Wirkverbindungen angesteuerten Bremsaktuatoren eine Bremskraft, die größer oder gleich einer Mindestbremskraft ist. Damit ist erfindungsgemäß gewährleistet, dass bei einem Ausfall einer Bremssteuerung genügend Bremsaktuatoren von anderen Bremssteuerungen mittels Steuersignalen angesprochen werden und bei einem Abbremsen des Schienenfahrzeugs trotz Ausfall einer Bremssteuerung eine Mindestbremskraft zur Verfügung steht. Dies eröffnet die Möglichkeit Bremsanlagen einer hohen Ausfallsicherheit bei wesentlich reduzierter Anzahl an Bremssteuerungen zu schaffen. Die Gesamtanzahl der Bremssteuerungen ist somit gegenüber dem Stand der Technik unabhängig von der Anzahl der Wagen (z) auf eine natürliche Zahl, die maximal (z -1) und minimal 2 ist, reduzierbar.

Die Mindestbremskraft, welche die Bremsanlage auch bei Ausfall einer Bremssteuerung aufrechterhalten muss, richtet sich nach einem jeweils vorgeschriebenen maximal zulässigen Bremsweg. Eine Bremssteuerung umfasst im Rahmen der Erfindung beispielsweise Hardware- und Softwarekomponenten. Abweichend davon umfasst eine Bremssteuerung ausschließlich Software. Dabei ist eine Bremssteuerung beispielsweise ein Bauteil, auf dem ihrer Softwarekomponenten ablaufen und gespeichert sind. Die Bremssteuerung kann aber auch aus Softwarekomponenten bestehen, welche auf ohnehin im Schienenfahrzeug vorhandenen Bauteilen verteilt oder zusammen auf einem ohnehin vorhandenen Bauteil implementiert sind. Sie empfängt Signale zur Anwendung oder Freigabe von Not- Schnell- und/oder einer normalen Betriebsbremsung. Hierzu erzeugt die Bremssteuerung Steuersignale, welche ein Einstellen von Bremsaktuatoren bewirken. Die Bremssteuerung steht somit in Wirkverbindung mit mindestens einem Bremsaktuator.

Eine derartige Wirkverbindung kann über Bauteile realisiert sein. Es kann sich beispielsweise um eine Abfolge von elektrischen Leitungen, Steuerventilen und sich anschließenden Bremsfluid leitenden Versorgungsleitungen handeln. Eine derartige Wirkverbindung könnte aber auch über eine Funkverbindung oder ein Bussystem realisiert sein.

Erfindungsgemäß kann ein Bremsaktuator durch Steuersignale einer oder mehrerer Bremssteuerungen einstellbar sein. Dabei verlaufen von jeder dieser Bremssteuerungen ausgehende Wirkverbindungen bis zu dem besagten Bremsaktuator. Ist ein Bremsaktuator mit zwei Bremssteuerungen verbunden, also mit anderen Worten durch Steuersignale von zwei Bremssteuerungen einstellbar, bedeutet dies, dass eine konfliktfreie Wirkung der Bremssteuerungen auf den Bremsaktuator gewährleistet ist und bei Ausfall der einen Bremssteuerung die andere Bremssteuerung das Einstellen des Bremsaktuators vollständig übernimmt. Eine konfliktfreie Wirkung der Bremsteuerungen auf den Bremsaktuator ist vorteilhafter Weise dadurch gewährleistet, dass mittels einer an geeigneter Stelle angeordneten Vergleichseinheit nur eine der beiden Wirkverbindungen zwischen Bremsaktuator und Bremssteuerung geschaltet ist und die andere Wirkverbindung unterbrochen oder umgeleitet ist. Wichtig dabei ist nur, dass die Vergleichseinheit bei Ausfall einer der beiden Bremssteuerungen die Wirkverbindung zwischen der anderen Bremssteuerung und dem Bremsaktuator schaltet. Ist ein Bremsaktuator durch Steuersignale von mehr als zwei Bremssteuerungen einstellbar, kann eine analog aufgebaute Vergleichseinheit an geeigneter Stelle angeordnet sein. Beispielsweise indem die Vergleichseinheit aus einer Kombination mehrerer einfacher Vergleichseinheiten aufgebaut ist. Die Vergleichseinheit kann sich auch aus mehreren, räumlich verteilten Untereinheiten zusammensetzen.

Die Gesamtanzahl der Bremssteuerungen ist erfindungsgemäß geringer als die Anzahl der Wagen aber mindestens gleich zwei, wobei sich die Gesamtanzahl auf die Bremsanlage im Ganzen bezieht. Das Schienenfahrzeug kann aber unabhängig hiervon auch noch über weitere Bremssysteme verfügen. Diese sind nicht in die Betrachtung mit einzubeziehen. Beispielsweise kann die Gesamtanzahl der Bremssteuerungen bei z Wagen maximal (z-1) und minimal 2 betragen.

Im Folgenden sind Ausführungsbeispiele angegeben zur Zuordnung der Bremssteuerungen zu den Bremsaktuatoren des Schienenfahrzeugs.

Gemäß einem ersten Ausführungsbeispiel sei ein Schienenfahrzeug mit 12 Wagen gewählt und eine Bremsanlage mit vier Bremssteuerungen. Alle Drehgestelle des Schienenfahrzeugs seien gleich schwer belastet. Es sei eine Mindestbremskraft von 75% der Gesamtbremskraft des Schienenfahrzeugs vorgegeben. Beispielsweise können die Wirkverbindungen und deren Anzahl derart gewählt sein, dass jeder Bremsaktuator mit nur einer Bremssteuerung verbunden ist, wobei jeweils drei Wagen genau einer Bremssteuerung zugeordnet sind. Fällt eine der Bremssteuerungen aus, entfällt auf die restlichen neun Wagen eine Bremskraft von 75% der Gesamtbremskraft des Schienenfahrzeugs. Die Bremsaktuatoren der neun Wagen sind durch Steuersignale der drei anderen Bremssteuerungen einstellbar und die Gesamtanzahl der Bremssteuerungen ist sehr viel geringer als die Anzahl der Wagen. Die drei Wagen, deren Bremsaktuatoren von einer Bremssteuerung angesprochen werden, können direkt nebeneinander angeordnet sein. Dadurch müssen die Wirkverbindungen, ausgehend von der Bremssteuerung, nicht über lange Distanzen geführt werden. Die drei Wagen können aber auch über das Schienenfahrzeug verteilt angeordnet sein, wodurch sich lange Wirkverbindungen ergeben. Hierdurch wird bei Ausfall einer Bremssteuerung ein Stauchen oder Zerren des Schienenfahrzeugs vermindert.

Gemäß einem weiteres Ausführungsbeispiel der Erfindung umfasst die Bremsanlage für ein Schienenfahrzeug mit zwölf Wagen eine Bremsanlage mit vier Bremssteuerungen, bei gleich schweren Drehgestellen und einer Mindestbremskraft von 75% der Gesamtbremskraft, wobei die Wirkverbindungen derart zugeordnet sind, dass die Bremsaktuatoren der ersten sechs Wagen mit je zwei der vier Bremssteuerungen verbunden sind und die Bremsaktuatoren der letzen sechs Wagen mit den anderen beiden der vier Bremssteuerungen verbunden sind. Bei Ausfall einer Bremssteuerung bleibt die gesamte Bremskraft des Schienenfahrzeugs erhalten. Da in diesem Ausführungsbeispiel jeder Bremsaktuator mit zwei Bremssteuerungen verbunden ist, kann eine Vergleichseinheit jedem Bremsaktuator zugeordnet sein, welche an geeigneter Stelle angeordnet ist und je eine der beiden Wirkverbindungen zu dem Bremsaktuator durchschaltet, und die anderen Wirkverbindung unterbricht.

Es kann vorteilhaft vorgesehen sein, dass die Anzahl der Bremssteuerungen gleich zwei ist.

Eine mögliche Zuordnung der beiden Bremssteuerungen zu den Bremsaktuatoren sieht vorteilhaft vor, dass beide Bremssteuerungen in Wirkverbindung zu allen Bremsaktuatoren stehen. Die Anzahl der Wirkverbindungen ist in diesem Fall hoch. Da jede Wirkverbindung durch physikalische Bauteile realisiert ist, fallen hohe Kosten an. Um die Anzahl der Wirkverbindungen zu reduzieren, können die beiden Bremssteuerungen auch derart mit den Bremsaktuatoren verbunden sein, dass nur Bremsaktuatoren einer ausreichenden Anzahl an Wagen durch beide Bremssteuerungen einstellbar sind und die restlichen Bremsaktuatoren in Wirkverbindung mit nur einer der beiden Bremssteuerungen stehen. Im konkreten Fall eines Schienenfahrzeugs mit 12 Wagen mit gleich schweren Drehgestellen und einer Mindestbremskraft von 50% der Gesamtbremskraft bedeutet dies, dass die Hälfte der Bremsaktuatoren über Steuersignale beider Bremssteuerungen einstellbar ist und die restlichen Bremsaktuatoren über Steuersignale nur einer der beiden Bremssteuerungen einstellbar sind.

Vorteilhafter Weise kann weiter vorgesehen sein, dass die in abzubremsende Bauteile der schweren Drehgestelle einleitbaren Bremskräfte von Bremsaktuatoren erzeugt sind, welche jeweils in Wirkverbindung zu mindestens zwei Bremssteuerungen stehen.

Um ein Zerren oder Stauchen des Schienenfahrzeugs bei einem Abbremsvorgang zu vermeiden, ist es üblich jeden Wagen mit einer annähernd gleichen Verzögerung abzubremsen. Daraus folgt, dass schwere Drehgestelle mit einer höheren Bremskraft abzubremsen sind als leichte Drehgestelle. Hierzu ist es üblich, die Steuersignale einer Bremssteuerung in eine entsprechend große Steuergröße umzuwandeln, die für alle schweren Drehgestelle annähernd die gleiche Größe hat.

Um eine erfindungsgemäße Bremsanlage mit besonders wenigen Bauteilen zu schaffen, kann die Anzahl der Wirkverbindungen reduziert werden, indem vorrangig solche Bremsaktuatoren durch mindestens zwei Bremssteuerungen abgesichert sind, welche hohe Bremskräfte erzeugen. Diese Bremsaktuatoren sind an den schweren Drehgestellen angeordnet.

Weiter kann vorteilhaft vorgesehen sein, dass ein Bremsaktuator, welcher in Wirkverbindung zu mindestens zwei Bremssteuerungen steht, mit einer Vergleichseinheit derart verbunden ist, dass die mindestens zwei Wirkverbindungen jeweils von einer der mindestens zwei Bremssteuerung ausgehend sich bis zu der Vergleichseinheit erstrecken und von der Vergleichseinheit weiter bis zu dem Bremsaktuator, und die Vergleichseinheit Mittel aufweist Wirkverbindungen auszuwählen und durchzuschalten oder zu blockieren oder umzuleiten.

Ist ein Bremsaktuator durch Steuersignale von mindestens zwei Bremssteuerungen einstellbar, bedeutet dies, dass eine konfliktfreie Wirkung der Bremssteuerungen auf den Bremsaktuator gewährleistet ist und bei Ausfall der einen Bremssteuerung eine der anderen Bremssteuerung das Einstellen des Bremsaktuators übernimmt. Da dies sicherheitstechnisch ein sensibler Punkt ist, ist es vorteilhaft eine Koordination der Wirkverbindungen durch extra hierfür vorgesehene Bauteile - die Vergleichseinheiten - vorzusehen. Da derartige Vergleichseinheiten üblicherweise sehr viel preiswerter sind als Bremssteuerungen, kann die zu wählende Anzahl der Vergleichseinheiten hoch sein, beispielsweise kann jedem Bremsaktuator eine eigene Vergleichseinheit vorgeschaltet sein. Dies erhöht die Ausfallsicherheit der Bremsanlage, da bei einer Störung der Vergleichseinheit nur der jeweilige Bremsaktuator ausfällt.

Die Vergleichseinheiten könnten alternativ auch mit Auswahleinheiten, Schalteinheiten, Übersetzungseinheiten etc. bezeichnet werden, denn die Auswahl der Wirkverbindungen muss nicht anhand eines Vergleichs erfolgen. Die Auswahl kann auch in der Weise erfolgen, dass nach einem Zufallsprinzip das erste Steuersignal ausgewählt wird, das auf keine Störung der zugehörigen Bremssteuerung hinweist. Die Vergleichseinheiten können auch derart aufgebaut sein, dass sie als Resultat der Auswahl eine andere Form von Steuergröße erzeugen und weiterleiten als sie von den Bremssteuerungen empfangen haben. Beispielsweise indem durch die Vergleichseinheit empfangene elektrische Steuersignale verglichen werden und als Resultat ein Steuerdruck weitergeleitet wird. Die Vergleichseinheiten können auch derart angeordnet sein, dass sie von den Steuersignalen abgeleitete Steuergrößen empfangen, und als Resultat der Auswahl eine der Steuergrößen weiterleiten.

Es kann auch als vorteilhaft angesehen werden, dass die in abzubremsende Bauteile der leichten Drehgestelle einleitbaren Bremskräfte von Bremsaktuatoren erzeugt sind, welche alle jeweils in Wirkverbindung zu einer gleichen Bremssteuerungen stehen und diese gleiche Bremssteuerung dafür eingerichtet ist, das Bremssignale einer Auslöseeinheit zum Auslösen einer Betriebsbremsung zu empfangen und innerhalb der Bremssteuerung zur Erhöhung der Ausfallsicherheit zwei zusätzliche und voneinander unabhängige Bremssteuerungen angeordnet sind, welche dafür eingerichtet sind das Bremssignal einer Auslöseeinheit zum Auslösen einer Notbremsung zu empfangen um in Abhängigkeit dieses Bremssignals Steuersignale zu erzeugen.

Zur Reduktion von Bauteilen der Bremsanlage können Bremssteuerungen und Bauteile zur Realisierung von Wirkverbindungen eingespart werden, indem die leichten Drehgestelle mittels der Steuersignale einer einzigen Bremssteuerung abgebremst werden. Entfällt eine Mindestbremskraft auf die Bremsaktuatoren der schweren Drehgestelle, ist bei einem Ausfall der einzigen Bremssteuerung für die leichten Drehgestelle eine ausreichende Bremskraft des Schienenfahrzeugs gewährleistet. Entfällt ein geringerer Anteil als die Mindestbremskraft auf die Bremsaktuatoren der schweren Drehgestelle, ist aufgrund des Aufbaus der einzigen Bremssteuerung für die leichten Drehgestelle zumindest im Fall einer Notbremsung eine Mindestbremskraft des Schienenfahrzeugs gewährleistet. Hierzu weist die einzige Bremssteuerung für die leichten Drehgestelle zusätzlich redundante Bauteile zweier Bremssteuerungen auf, welche zum Empfang eines Bremssignals einer Auslöseeinheit für eine Notbremsung eingerichtet sind. Bei der Auslöseeinheit kann es sich beispielsweise um eine Vorrichtung mit einem Griff handeln, welche in einem Zugabteil leicht zugänglich angebracht ist, wobei zum Auslösen einer Notbremsung der Griff aus einer Halterung zu ziehen ist. Als Sonderfall einer Notbremsung soll hier auch eine Schnellbremsung verstanden werden, welche bei Nicht-Quittierung eines Signals der Auslöseeinheit durch den Fahrer, beispielsweise weil dieser schläft, automatisch eingeleitet wird. Da auf ein leichtes Drehgestell ein geringerer Anteil der gesamten Bremskraft entfällt als auf ein schweres Drehgestell, ist es ausreichend, diese nur für den Fall einer Notbremsung über eine zweite Bremssteuerung abzusichern.

Weiter kann vorteilhaft vorgesehen sein, dass die Wirkverbindungen zwischen einer Bremssteuerung und einem Bremsaktuator durch Steuern eines Bremsdrucks realisiert ist, wobei die Bremssteuerung mittels Steuersignalen ein Steuerventil ansteuert, das an seinem Ausgang den Bremsdruck mindestens in Abhängigkeit der Steuersignale bereitstellt.

Elektropneumatischen Bremsanlagen weisen derartige Wirkverbindungen auf, welche sich durch besonders kurze Druckaufbauzeiten auszeichnet. Ein Stauchen oder Zerren des Schienenfahrzeugs während des Abbremsvorganges wird hierdurch vermieden.

Es kann weiter vorteilhaft vorgesehen sein, das die Vergleichseinheit ein Doppelrückschlag-Ventil ist.

Eine weitere Aufgabe der Erfindung ist es, eine geeignete Bremssteuerung der eingangs genannten Art für eine erfindungsgemäße Bremsanlage anzugeben, welche besonders ausfallsicher ist.

Die Aufgabe wird erfindungsgemäß gelöst, indem die Bauteile jeweils doppelt ausgeführt sind.

Dem liegt der Gedanke zugrunde, dass die Anzahl der Bremssteuerungen und der Wirkverbindungen reduzierbar ist, wenn beispielsweise die leichten Drehgestelle nur über eine einzige, besonders ausfallsichere Bremssteuerung abgesichert sind. Hierzu weist die Bremssteuerung die Bauteile redundant auf, welche ein Bremssignal einer Notbrems-Auslöseeinheit empfangen und aufgrund ihrer doppelten Ausführung in zwei unabhängige Steuersignale umsetzen. Damit ist gewährleistet, dass die Bremsanlage zum Abbremsen des Schienenfahrzeugs auch bei einem Ausfall eines Bauteils der Bremssteuerung stets eine Mindestbremskraft bereitstellt.

Eine weitere Aufgabe der Erfindung ist es, ein Verfahren zum Abbremsen eines Schienenfahrzeugs anzugeben, welches ein sicheres Abbremsen ermöglicht und hierzu eine besonders geringe Anzahl an Bauteilen verwendet.

Die Aufgabe wird erfindungsgemäß bei einem Verfahren der eingangs genannten Art dadurch gelöst, dass zum Abbremsen des Schienenfahrzeugs weniger Bremssteuerungen als Wagen verwendet werden, mindestens aber zwei Bremssteuerungen verwendet werden und jede Bremssteuerung nur so viele Bremsaktuatoren ausschließlich ansteuert, dass die bei Ausfall der Bremssteuerung verbleibenden und ansteuerbaren Bremsaktuatoren eine Bremskraft in Summe erzeugen, die größer als die Mindestbremskraft ist.

Bremsaktuatoren, welche ausschließlich von einer Bremssteuerung angesteuert werden, stehen nur in Wirkverbindung zu dieser einen Bremssteuerung.

Die verbleibenden und ansteuerbaren Bremsaktuatoren stehen zumindest mit zwei Bremssteuerungen in Wirkverbindung, so dass bei einem Ausfall einer der mindestens zwei Bremssteuerungen die Bremsaktuatoren ansteuerbar bleiben.

Eine vorteilhafte Ausgestaltung des Verfahrens kann vorsehen, dass mindestens drei Bremssteuerungen verwendet werden.

Eine weitere vorteilhafte Ausgestaltung des Verfahrens kann vorsehen, dass die schweren Drehgestelle mittels des Steuersignals einer ersten Bremssteuerung abgebremst werden und die leichten Drehgestelle mittels eines Steuersignals einer zweiten Bremssteuerung und bei Ausfall der ersten Bremssteuerung die schweren Drehgestelle mittels der zweiten Bremssteuerung abgebremst werden und bei Ausfall der zweiten Bremssteuerung die leichten Drehgestelle erst nach Auslösen einer Notbremsung durch eine unabhängige Notbremssteuerung abgebremst werden.

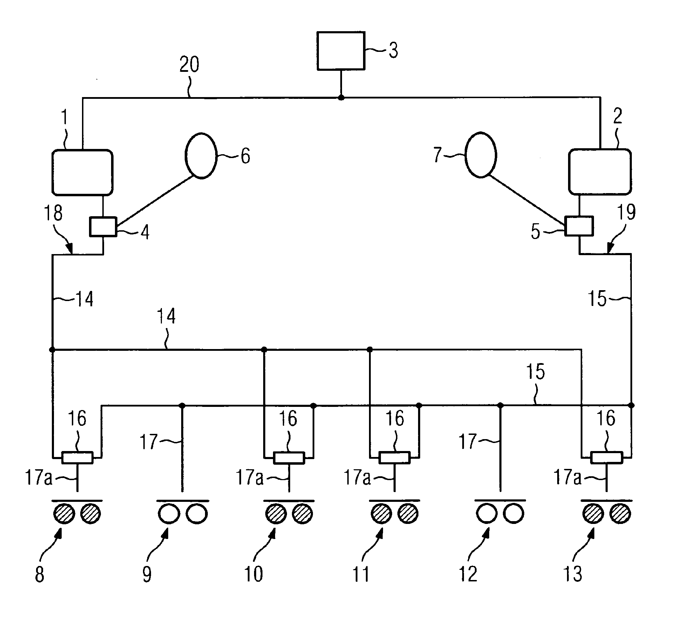

Weitere zweckmäßige Ausgestaltungen und Vorteile der Erfindung sind Gegenstand der nachfolgenden Beschreibung von Ausführungsbeispielen der Erfindung unter Bezug auf die Figur der Zeichnung, wobei gleiche Bezugszeichen auf gleich wirkende Bauteile verweisen. Dabei zeigt die
- Fig. 1: eine schematische Darstellung eines Ausführungsbeispiels einer erfindungsgemäßen Bremsanlage.

In Figur 1 ist ein Ausführungsbeispiel einer erfindungsgemäßen Bremsanlage für ein Schienenfahrzeug in schematische Darstellung gezeigt. Die dargestellten Einheiten sind in ihrem funktionellen Zusammenhang gezeichnet, so dass ihre Lage zueinander nicht ihrer relativen Lage innerhalb des Schienenfahrzeugs entspricht. Die Bremsanlage ist eine direkte, elektropneumatische Bremsanlage mit zwei Bremssteuerungen 1, 2. Die Bremssteuerungen erzeugen Steuersignale, welche bei einem Abbremsvorgang die Steuerventile 4, 5 ansteuern zur Freigabe eines Bremsdrucks 18, 19, welcher einem Vorratsbehälter 6, 7 entnommen wird. Die Bremsdrücke 18, 19 werden dabei in Versorgungsleitungen, ausgehend von den Vorratsbehältern 6, 7 über die Steuerventile 4, 5 entlang den Versorgungsleitungen 14, 15 zu den Drehgestellen 8, 9, 10, 11, 12, 13 geführt. Einige Drehgestelle 8, 10, 11, 13 können über beide Bremsdrücke 18, 19 versorgt werden, wobei diesen Drehgestellen eine Vergleichseinheit 16 vorgeschaltet ist, welche die anliegenden Bremsdrücke in den Versorgungsleitungen 14, 15 vergleicht, und den größeren der beiden Bremsdrücke durchschaltet in die jeweilige Versorgungsleitung 17a. Die Vergleichseinheit 16 kann beispielsweise derart ausgestaltet sein, dass ein Leck in der Versorgungsleitung 17a keinen Einfluss auf die Bremsdrücke 18, 19 in den Versorgungsleitungen 14, 15 hat. Gemäß eines weiteren Ausführungsbeispiels ist die Vergleichseinheit 16 derart ausgestaltet, dass ein Leck in der Versorgungsleitung 17a nur auf einen der beiden Bremsdrücke 18 oder 19 in den Versorgungsleitungen 14, 15 druckmindernd wirkt. Im Bereich eines jeden Drehgestells 8, 9, 10, 11, 12, 13 ist mindestens ein Bremsaktuator (nicht dargestellt) angeordnet, welcher durch einen Bremsdruck in den Versorgungsleitungen 17, 17a einstellbar ist und hierbei eine Kraft in abzubremsende Teile des Drehgestells 8, 9, 10, 11, 12, 13 einleitet. Der Bremsdruck kann vor Erreichen der Bremsaktuatoren noch durch weitere Vorrichtungen (nicht dargestellt) modifiziert werden. Beispielsweise durch eine Antiblockiereinrichtung. Ein Abbremsvorgang kann durch die Betätigungseinrichtung 3 ausgelöst werden. Hierbei kann es sich beispielsweise um die Betätigungseinrichtung 3 für eine Betriebsbremsung oder für eine Notbremsung handeln, welche vom Fahrer des Schienenfahrzeugs bedient wird. Bei Betätigung wird von der Betätigungseinrichtung 3 ein Bremssignal erzeugt, welches mittels der Leitung 20 zu den Bremssteuerungen 1, 2 übertragen wird.

Die Drehgestelle 8, 9, 10, 11, 12, 13 können mit unterschiedlich großen Gewichtskräften belastet sein. Bei dem Schienenfahrzeug kann es sich beispielsweise um zwei verbundene Triebzüge handeln, wobei die Drehgestelle 8, 9, 10 dem ersten Triebzug und die Drehgestelle 11, 12, 13 dem zweiten Triebzug zugeordnet sein können. Die Drehgestelle müssen nicht einzelnen Wagen des Triebzuges zugeordnet sein. Beispielsweise können die Drehgestelle 9 und 12 Jakobs-Drehgestelle sein, auf welche sich zwei Wagen aufstützen, wobei die Enden der beiden Wagen sich auf die beiden anderen Drehgestelle aufstützen. Beispielsweise kann jeder der beiden Triebzüge eine Achsfolge B'(2)'B' aufweisen, so dass die Drehgestelle dadurch mit unterschiedlichen Gewichtskräften belastet sind, indem über den Drehgestellen 8, 10, 11, 13 schwere Motoren angeordnet sind, während sich über den Drehgestellen 9, 12 nur ein leichter Mittelbau befindet. Um beim Abbremsen ein Zerren oder Stauchen des Schienenfahrzeugs zu vermeiden, sind die Bremsdrücke so gewählt, dass der Bremsdruck 18 stets größer ist als der Bremsdruck 19, so dass bei intakten Bremsteuerungen die schweren Drehgestelle durch größere Bremskräfte abgebremst werden als die leichten Drehgestelle und somit eine gleichmäßige Verzögerung entlang des Schienenfahrzeugs gewährleistet ist. Die Bremsaktuatoren der Drehgestelle 8, 10, 11, 13 können sowohl über den Bremsdruck 18 als auch über den Bremsdruck 19 eingestellt werden, je nachdem, welchen der beiden Bremsdrücke die Vergleichseinheit 16 als den größeren der beiden durchschaltet. Fällt die Bremssteuerung 1 aus, schalten die Vergleichseinheiten 16 den Bremsdruck 19 zu den Drehgestellen 8, 10, 11, 13 durch. Erfindungsgemäß ist in beiden Fällen gewährleistet, dass eine Mindestbremskraft von den Bremsaktuatoren der Drehgestelle 8, 10, 11, 13 aufgebracht wird. Fällt die Bremssteuerung 2 aus, wird in der Versorgungsleitung 15 kein Bremsdruck 19 weitergeleitet, so dass die Bremsaktuatoren 9, 12 der leichten Drehgestelle keine Bremskraft in abzubremsende Teile einleiten. Der Bremsweg des Schienenfahrzeugs verlängert sich also in beiden Fällen, aber nicht über ein jeweils vorgeschriebenes maximales Maß hinaus.

### Bezugszeichenliste

- 1: Bremssteuerung
- 2: Bremssteuerung
- 3: Betätigungseinrichtung
- 4: Steuerventil
- 5: Steuerventil
- 6: Vorratsbehälter
- 7: Vorratsbehälter
- 8, 10, 11, 13: schweres Drehgestell
- 9, 12: leichtes Drehgestell
- 14: Versorgungsleitung
- 15: Versorgungsleitung
- 16: Vergleichseinheit
- 17, 17a: Versorgungsleitung
- 18: Bremsdruck
- 19: Bremsdruck
- 20: Leitung

## Patentansprüche

1. Bremsanlage
- für ein in Wagen unterteiltes Schienenfahrzeug mit Drehgestellen (8,9,10,11,12,13), welche das Schienenfahrzeug tragen, so dass die Drehgestelle (8,9,10,11,12,13) durch eine auf ihnen lastende Gewichtskraft belastet sind und anhand dieser Gewichtskraft eine Unterteilung in schwere und leichte Drehgestelle festgelegt ist,
- mit mindestens einer betätigbaren Auslöseeinheit (3) zur Erzeugung eines Bremssignals,
- und mit Bremssteuerungen (1,2), welche das Bremssignal empfangen und in Abhängigkeit des Bremssignals Steuersignale erzeugen,
- und mit Bremsaktuatoren, die mit wenigstens einer Bremssteuerung (1,2) mittels einer Wirkverbindung verbunden sind und in Abhängigkeit der Steuersignale eine Bremskraft erzeugen **dadurch gekennzeichnet, dass**
- die Anzahl der Bremssteuerungen (1,2) geringer als die Anzahl der Wagen aber mindestens gleich zwei ist
- und die Wirkverbindungen und deren Anzahl derart gewählt ist, dass jede Wirkverbindung von einer Bremssteuerung (1,2) ausgeht und sich bis zu einem Bremsaktuator erstreckt und für jede Bremssteuerung (1,2) so viele Fremd-Wirkverbindungen vorgesehen sind, welche jeweils von einer anderen Bremssteuerung (1,2) ausgehen, dass die Summe der Bremskräfte der Bremsaktuatoren, die mit den Fremd-Wirkverbindungen verknüpft sind, größer oder gleich einer Mindestbremskraft ist.

2. Bremsanlage für ein Schienenfahrzeug nach Anspruch 1,
**dadurch gekennzeichnet, dass** die Anzahl der Bremssteuerungen (1,2) gleich zwei ist.

3. Bremsanlage für ein Schienenfahrzeug nach einem der vorstehenden Ansprüche,
**dadurch gekennzeichnet, dass** die in abzubremsende Bauteile der schweren Drehgestelle (8,10,11,13) einleitbaren Bremskräfte von Bremsaktuatoren erzeugt sind, welche jeweils in Wirkverbindung zu mindestens zwei Bremssteuerungen (1,2) stehen.

4. Bremsanlage für ein Schienenfahrzeug nach einem der vorstehenden Ansprüche,
**dadurch gekennzeichnet, dass** ein Bremsaktuator, welcher in Wirkverbindung zu mindestens zwei Bremssteuerungen (1,2) steht, mit einer Vergleichseinheit (16) derart verbunden ist, dass die mindestens zwei Wirkverbindungen jeweils von einer der mindestens zwei Bremssteuerung (1,2) ausgehend sich bis zu der Vergleichseinheit (16) erstrecken und von der Vergleichseinheit (16) weiter bis zu dem Bremsaktuator, und die Vergleichseinheit (16) Mittel aufweist Wirkverbindungen auszuwählen und durchzuschalten oder zu blockieren oder umzuleiten.

5. Bremsanlage für ein Schienenfahrzeug nach einem der vorstehenden Ansprüche,
**dadurch gekennzeichnet, dass** die in abzubremsende Bauteile der leichten Drehgestelle (9,12) einleitbaren Bremskräfte von Bremsaktuatoren erzeugt sind, welche alle jeweils in Wirkverbindung zu einer gleichen Bremssteuerung (2) stehen und diese gleiche Bremssteuerung dafür eingerichtet ist das Bremssignale einer Auslöseeinheit (3) zum Auslösen einer Betriebsbremsung zu empfangen und innerhalb der Bremssteuerung (2) zur Erhöhung der Ausfallsicherheit zwei zusätzliche und voneinander unabhängige Bremssteuerungen angeordnet sind, welche dafür eingerichtet sind das Bremssignal einer Auslöseeinheit zum Auslösen einer Notbremsung zu empfangen und in Abhängigkeit des Bremssignals Steuersignale zu erzeugen.

6. Bremsanlage für ein Schienenfahrzeug nach Anspruch 4,
**dadurch gekennzeichnet, dass** die Vergleichseinheit (16) ein Doppelrückschlag-Ventil ist.

7. Bremsanlage für ein Schienenfahrzeug nach einem der vorstehenden Ansprüche,
**dadurch gekennzeichnet, dass** die Wirkverbindungen zwischen einer Bremssteuerung (1,2) und einem Bremsaktuator durch Steuern eines Bremsdrucks (18,19) realisiert ist, wobei die Bremssteuerung (1,2) mittels Steuersignalen ein Steuerventil (4,5) ansteuert, das an seinem Ausgang den Bremsdruck (18,19) mindestens in Abhängigkeit der Steuersignale bereitstellt.

8. Bremssteuerung für eine Bremsanlage nach einem der vorstehenden Ansprüche, mit Bauteilen, welche zum Empfang von eine Notbremsung auslösenden Bremssignalen eingerichtet sind und in Abhängigkeit der Bremssignale Steuersignale für einen Bremsaktuator erzeugen,
**dadurch gekennzeichnet, dass** die Bauteile jeweils doppelt ausgeführt sind.

9. Verfahren zum Abbremsen eines in Wagen unterteilten Schienenfahrzeugs mit Drehgestellen (8,9,10,11,12,13), welche das Schienenfahrzeug tragen, so dass die Drehgestelle (8,9,10,11,12,13) durch eine auf ihnen lastende Gewichtskraft des Schienenfahrzeugs belastet sind, und anhand dieser Gewichtskraft eine Unterteilung in schwere und leichte Drehgestelle festgelegt ist, und mit einer Bremsanlage mit mindestens einer betätigbaren Auslöseeinheit (13), und mit Bremsaktuatoren, welche jeweils in Wirkverbindung zu einem abzubremsenden Bauteil stehen, und mit Bremssteuerungen (1,2), welche in Wirkverbindung mit Bremsaktuatoren stehen
bei dem
ein Abbremsvorgang durch Betätigen der Auslöseeinheit (3) unter Gewinnung eines Bremssignals gestartet wird, welches von den Bremssteuerungen (1,2) empfangen wird und jede der Bremssteuerungen (1,2) daraufhin Steuersignale erzeugt, wobei Bremsaktuatoren mittels dieser Steuersignale angesprochen werden, so dass die Bremsaktuatoren in Abhängigkeit der Steuersignale eine Kraft in abzubremsende Bauteile der Drehgestelle (8, 9, 10, 11, 12, 13) einleiten,
- wobei bei Ausfall einer Bremssteuerung (1,2) die Anzahl der Bremsaktuatoren, die jeweils mit einer anderen Bremssteuerung verbunden sind, noch eine Bremskraft erzeugen, die größer als eine Mindestbremskraft ist,
**dadurch gekennzeichnet, dass**
- zum Abbremsen des Schienenfahrzeugs weniger Bremssteuerungen (1,2) als Wagen verwendet werden, mindestens aber 2 Bremssteuerungen (1,2) verwendet werden
- und jede Bremssteuerung (1,2) nur so viele Bremsaktuatoren ausschließlich ansteuert, dass die bei Ausfall der Bremssteuerung verbleibenden und ansteuerbaren Bremsaktuatoren eine Bremskraft in Summe erzeugen, die größer als die Mindestbremskraft ist.

10. Verfahren zum Abbremsen eines Schienenfahrzeugs nach Anspruch 9,
**dadurch gekennzeichnet, dass** mindestens drei Bremssteuerungen (1,2) verwendet werden.

11. Verfahren zum Abbremsen eines Schienenfahrzeugs nach Anspruch 10,
**dadurch gekennzeichnet, dass** die schweren Drehgestelle (8,10,11,13) mittels der Steuersignale einer ersten Bremssteuerung (1) abgebremst werden und die leichten Drehgestelle (9,12) mittels der Steuersignale einer zweiten Bremssteuerung (2) und bei Ausfall der ersten Bremssteuerung (1) die schweren Drehgestelle (8,10,11,13) mittels der zweiten Bremssteuerung (2) abgebremst werden und bei Ausfall der zweiten Bremssteuerung (2) die leichten Drehgestelle (9,12) erst nach Auslösen einer Notbremsung abgebremst werden.

## Claims

1. Brake system
- for a rail vehicle which is divided into railcars and has bogies (8, 9, 10, 11, 12, 13) which bear the rail vehicle, with the result that the bogies (8, 9, 10, 11, 12, 13) are loaded by a weight force which burdens them, and on the basis of this weight force a division into heavy and lightweight bogies is defined,
- having at least one triggering unit (3), which can be activated, for generating a brake signal,
- and having brake controllers (1, 2) which receive the brake signal and generate control signals as a function of the brake signal,
- and having brake actuators which are connected to at least one brake controller (1, 2) by means of an active connection and generate a braking force as a function of the control signals, **characterized in that**
- the number of brake controllers (1, 2) is smaller than the number of railcars but at least equal to two,
- and the active connections and their number are selected such that each active connection starts from a brake controller (1, 2) and extends to a brake actuator, and for each brake controller (1, 2) so many extraneous active connections are provided, which each start from another brake controller (1, 2), that the sum of the braking forces of the brake actuators which are linked to the extraneous active connections is greater than or equal to a minimum braking force.

2. Brake system for a rail vehicle according to Claim 1, **characterized in that** the number of brake controllers (1, 2) is equal to two.

3. Brake system for a rail vehicle according to one of the preceding claims,
**characterized in that** the braking forces which can be applied to components, to be braked, of the heavy bogies (8, 10, 11, 13) are generated by brake actuators which each have an active connection to at least two brake controllers (1, 2).

4. Brake system for a rail vehicle according to one of the preceding claims,
**characterized in that** a brake actuator which has an active connection to at least two brake controllers (1, 2) is connected to a comparison unit (16) such that the at least two active connections each start from one of the at least two brake controllers (1, 2) and extend to the comparison unit (16), and extend further from the comparison unit (16) to the brake actuator, and the comparison unit (16) has means for selecting active connections and connecting them through or blocking or diverting them.

5. Brake system for a rail vehicle according to one of the preceding claims,
**characterized in that** the braking forces which can be applied to components, to be braked, of the lightweight bogies (9, 12) are generated by brake actuators which all each have an active connection to the same brake controller (2), and this same brake controller is configured to receive the brake signal of a triggering unit (3) to trigger a service braking operation, and within the brake controller (2) two additional brake controllers are arranged for increasing the fail safety, which brake controllers are independent of one another and are configured to receive the brake signal of a triggering unit to trigger an emergency braking operation and to generate control signals as a function of the brake signal.

6. Brake system for a rail vehicle according to Claim 4, **characterized in that** the comparison unit (16) is a double non-return valve.

7. Brake system for a rail vehicle according to one of the preceding claims,
**characterized in that**
the active connections between a brake controller (1, 2) and a brake actuator are implemented by controlling a brake pressure (18, 19), wherein the brake controller (1, 2) actuates, by means of control signals, a control valve (4, 5) which makes available the brake pressure (18, 19) at its outlet at least as a function of the control signals.

8. Brake controller for a brake system according to one of the preceding claims,
having components which are configured to receive brake signals which trigger an emergency braking operation and generate control signals for a brake actuator as a function of the brake signals,
**characterized in that**
the components are each of doubled design.

9. Method for braking a rail vehicle which is divided into railcars and has bogies (8, 9, 10, 11, 12, 13) which bear the rail vehicle, with the result that the bogies (8, 9, 10, 11, 12, 13) are loaded by a weight force of the rail vehicle which burdens them, and on the basis of this weight force a division into heavy and lightweight bogies is defined, and having a brake system with at least one triggering unit (13) which can be activated, and having brake actuators which each have an active connection to a component which is to be braked, and having brake controllers (1, 2) which have an active connection to brake actuators,
in which
a braking process is started by activating the triggering unit (3) by acquiring a brake signal which is received from the brake controllers (1, 2), and in response each of the brake controllers (1, 2) generates control signals, wherein brake actuators are addressed by means of these control signals, with the result that the brake actuators apply a force to components, to be braked, of the bogies (8, 9, 10, 11, 12, 13) as a function of the control signals,
- wherein in the event of failure of a brake controller (1, 2) the number of brake actuators which are each connected to another brake controller are still generating a braking force which is higher than a minimum braking force, **characterized in that**
- fewer brake controllers (1, 2) than railcars are used to brake the rail vehicle, but at least 2 brake controllers (1, 2) are used,
- and each brake controller (1, 2) exclusively actuates only so many brake actuators that the brake actuators which remain in the event of failure of the brake controller and can be actuated generate a total braking force which is greater than the minimum braking force.

10. Method for braking a rail vehicle according to Claim 9, **characterized in that** at least three brake controllers (1, 2) are used.

11. Method for braking a rail vehicle according to Claim 10, **characterized in that**
the heavy bogies (8, 10, 11, 13) are braked by means of the control signals of a first brake controller (1), and the lightweight bogies (9, 12) are braked by means of the control signals of a second brake controller (2), and in the event of failure of the first brake controller (1) the heavy bogies (8, 10, 11, 13) are braked by means of the second brake controller (2), and in the event of failure of the second brake controller (2) the lightweight bogies (9, 12) are not braked until after an emergency braking operation has been triggered.

## Revendications

1. Système de freinage
- pour un véhicule sur rail subdivisé en voitures et ayant des boggies ( 8, 9, 10, 11, 12, 13 ) qui portent le véhicule sur rail de sorte que les boggies ( 8, 9, 10, 11, 12, 13 ) sont soumis à un poids pesant sur eux et au moyen de ce poids une subdivision en boggies lourds et légers est établie,
- comprenant au moins une unité ( 3 ) de déclenchement, qui peut être actionnée pour la production d'un signal de frein,
- et comprenant des commandes ( 1, 2 ) de frein, qui reçoivent le signal de frein et qui produisent des signaux de commande en fonction du signal de frein,
- et comprenant des actionneurs de frein, qui sont reliés à au moins une commande ( 1, 2 ) de frein au moyen d'une liaison d'action et qui produisent une force de freinage en fonction des signaux de commande,
**caractérisé en ce que**
- le nombre des commandes ( 1, 2 ) de frein est plus petit que le nombre des voitures, mais au moins égal à deux,
- et les liaisons d'action et leur nombre sont choisis de manière à ce que chaque liaison d'action parte d'une commande ( 1, 2 ) de frein et s'étende jusqu'à un actionneur de frein et pour chaque commande ( 1, 2 ) de frein, il est prévu tant de liaisons d'action extérieures, qui partent respectivement d'une autre commande ( 1, 2 ) de frein, que la somme des forces de freinage des actionneurs de frein, qui sont combinés aux liaisons d'action extérieures, est supérieure ou égale à une force de freinage minimum.

2. Système de freinage d'un véhicule sur rail suivant la revendication 1, **caractérisé en ce que** le nombre des commandes ( 1, 2 ) de frein est égal à deux.

3. Système de freinage d'un véhicule sur rail suivant l'une des revendications précédentes,
**caractérisé en ce que** les forces de freinage, pouvant être appliquées dans des éléments à freiner des boggies ( 8, 9, 10, 11, 12, 13 ) lourds, sont produites par des actionneurs de frein qui sont respectivement en liaison d'action avec au moins deux commandes ( 1, 2 ) de frein.

4. Système de freinage d'un véhicule sur rail suivant l'une des revendications précédentes,
**caractérisé en ce qu'**un actionneur de frein, qui est en liaison d'action avec au moins deux commandes ( 1, 2 ) de frein, est relié à unité ( 16 ) de comparaison de manière à ce que les au moins deux liaisons d'action s'étendent en partant respectivement de l'une des au moins deux commandes ( 1, 2 ) de frein jusqu'à l'unité ( 16 ) de comparaison et de l'unité ( 16 ) de comparaison plus loin jusqu'à l'actionneur de frein et l'unité ( 16 ) de comparaison a des moyens pour choisir des liaisons d'action et les brancher ou les bloquer ou les contourner.

5. Système de freinage d'un véhicule sur rail suivant l'une des revendications précédentes,
**caractérisé en ce que** les forces de freinage, pouvant être appliquées dans des éléments à freiner des boggies ( 9, 12 ) légers, sont produites par des actionneurs de frein, qui sont tous respectivement en liaison d'action avec une même commande ( 2 ) de frein et cette même commande de frein est conçue pour recevoir des signaux de frein de l'unité ( 3 ) de déclenchement pour le déclenchement d'un freinage de service et dans la commande ( 2 ) de frein sont disposées, pour augmenter la sécurité en cas de défaillance, deux commandes de frein supplémentaires et indépendantes l'une de l'autre, qui sont conçues pour recevoir le signal de frein d'une unité de déclenchement pour le déclenchement d'un freinage d'urgence et pour produire des signaux de commande en fonction du signal de frein.

6. Système de freinage d'un véhicule sur rail suivant la revendication 4,
**caractérisé en ce que** l'unité ( 16 ) de comparaison est un clapet anti-retour double.

7. Système de freinage d'un véhicule sur rail suivant l'une des revendications précédentes,
**caractérisé en ce que** les liaison d'action entre une commande ( 1, 2 ) de frein et un actionneur de frein sont réalisées par commande d'une pression ( 18, 19 ) de frein, la commande ( 1, 2 ) de frein commandant au moyen de signaux de commande une vanne ( 4, 5 ) de commande, qui met à disposition à sa sortie la pression ( 18, 19 ) de frein au moins en fonction des signaux de commande.

8. Commande de frein pour un système de freinage suivant l'une des revendications précédentes, comprenant des éléments qui sont conçus pour la réception de signaux de frein déclenchant un freinage d'urgence et qui en fonction des signaux de frein produisent des signaux de commande d'actionneur de frein, **caractérisée en ce que** les éléments sont réalisés respectivement en double.

9. Procédé de freinage d'un véhicule sur rail subdivisé en voitures ayant des boggies ( 8, 9, 10, 11, 12, 13 ) qui portent le véhicule sur rail de sorte que les boggies ( 8, 9, 10, 11, 12, 13 ) sont soumis à un poids du véhicule sur rail pesant sur eux et au moyen de ce poids une subdivision en boggies lourds et légers est établie et comprenant un système de freinage ayant au moins une unité ( 13 ) de déclenchement pouvant être actionnée et des actionneurs de frein, qui sont respectivement en liaison d'action avec un élément à freiner, et comprenant des commandes ( 1, 2 ) de frein qui sont en liaison d'action avec des actionneurs de frein,
dans lequel
on fait débuter une opération de freinage en actionnant l'unité ( 3 ) de déclenchement en obtenant un signal de frein, qui est reçu par les commandes ( 1, 2 ) de frein et chacune des commandes ( 1, 2 ) de frein produit ensuite des signaux de commande, des actionneurs de frein étant sollicités au moyen de ces signaux de commande de manière à ce que les actionneurs de frein appliquent en fonction des signaux de commande une force dans les éléments à freiner des boggies ( 8, 9, 10, 11, 12, 13 ),
- dans lequel, dans le cas de défaillance d'une commande ( 1, 2 ) de frein, le nombre des actionneurs de frein, qui sont reliés respectivement à une autre commande de frein, produit une force de freinage qui est encore plus grande qu'une force de freinage minimum,
**caractérisé en ce que**
- pour le freinage du véhicule sur rail on utilise moins de commande ( 1, 2 ) de frein que de voitures, mais au moins deux commandes ( 1, 2 ) de frein,
- et chaque commande ( 1, 2 ) de frein ne commande exclusivement qu'autant d'actionneurs de frein que les actionneurs de frein, restants en cas de défaillance de la commande de frein et pouvant être commandés, produisent au total une force de freinage qui est plus grande que la force de freinage minimum.

10. Procédé de freinage d'un véhicule sur rail suivant la revendication 9,
**caractérisé en ce que** l'on utilise au moins trois commandes ( 1, 2 ) de frein.

11. Procédé de freinage d'un véhicule sur rail suivant la revendication 10,
**caractérisé en ce que** l'on freine les boggies ( 8, 10, 11, 13 ) lourds au moyen des signaux de commande d'une première commande ( 1, 2 ) de frein et les boggies ( 8, 9, 10, 11, 12, 13 ) légers au moyen des signaux de commande d'une deuxième commande ( 2 ) de frein et, si la première commande ( 1 ) de frein est défaillante, on freine les boggies ( 8, 10, 11, 13 ) lourds au moyen de la deuxième commande ( 2 ) de frein et, si la deuxième commande ( 2 ) de frein est défaillante, on freine les boggies ( 9, 12 ) légers seulement après le déclenchement d'un freinage d'urgence.
